# EUROPÄISCHE PATENTANMELDUNG

(11) **EP 1 738 999 A2**
(43) Veröffentlichungstag der Anmeldung: **03.01.2007**
(21) Anmeldenummer: 06013084.6
(22) Anmeldetag: 26.06.2006
(51) Int. Cl.: B62K 19/30, B62J 6/00

(54) **Kennzeichenhalter für ein Motorrad, Baugruppe eines Kennzeichenhalters und Motorrad mit Kennzeichenhalter**

(30) Priorität: 27.06.2005 DE 102005030069
(71) Anmelder: Guido Kellermann Produktentwicklund & Handel, 52068 Aachen (DE)
(72) Erfinder: Kellermann, Guido, 52072 Aachen (DE)
(74) Vertreter: Castell, Klaus

(57) **Zusammenfassung**

Die Erfindung betrifft einen Kennzeichenhalter bzw. eine Baugruppe eines Kennzeichenhalters. Bisherige Kennzeichenhalter sind im wesentlichen zufällig konstruiert worden. Die Erfindung stellt zahlreiche Aspekte eines verbesserten Kennzeichenhalters insbesondere auf die Stromführung, die Beleuchtung, die Verkehrssicherheit und die Windangriffsfläche vor.

## Beschreibung

Die Erfindung betrifft einen Kennzeichenhalter für ein Motorrad, eine Baugruppe eines Kennzeichenhalters für ein Motorrad und ein Motorrad mit einem Kennzeichenhalter.

In vielen Ländern der Welt tragen Motorräder an ihrem Heck ein amtliches Kennzeichen. Gleichfalls sind am Heck des Motorrads oft auch Blinkleuchten zum Signalisieren einer Fahrtrichtungsänderung vorgesehen, kurz als "Blinker" bezeichnet.

Die rechtlichen Vorschriften hierzu variieren stark mit den nationalen Gesetzgebungen und mit der Art des Motorrads. Beispielsweise können unterschiedliche Vorschriften für verschiedene Klassen von motorisierten Zweirädern gelten.

Zum Halten eines Kennzeichens, eines Blinkerpaares und/oder einer Kennzeichenbeleuchtung sind zahllose Vorrichtungen erhältlich.

Obwohl in der Motorradtechnik viel Forschung aufgebracht wird, um die einzelnen Komponenten eines Motorrades weiter zu optimieren, ist das große Verbesserungspotenzial von solchen Haltern bislang nicht entdeckt worden. Der Erfindung liegt die Aufgabe zugrunde, einen verbesserten Kennzeichenhalter für ein Motorrad zur Verfügung zu stellen.

Nach einem ersten Aspekt der Erfindung löst diese Aufgabe ein Kennzeichenhalter für ein Motorrad mit einem zentralen Haltestab mit an dessen Enden angesetzten Blinkern.

Nach diesem Aspekt der Erfindung unterscheidet sich ein Kennzeichenhalter von vorbekannten Kennzeichenhaltern insbesondere durch den zentralen Haltestab. Der zentrale Haltestab ermöglicht es, die zwangsweise vorhandenen Kabel der Blinkleuchten an einer zentralen Stelle zusammenzuführen und dort bereitzustellen. Dabei gibt der zentrale Haltestab Abstand und Ausrichtung der Blinker zueinander bevorzugt sicher vor, so dass auch Laien die Blinker einfach auswechseln und wieder montieren können.

Insbesondere bei kleinen Blinkern ist die exakte Ausrichtung zueinander und zur Horizontalen von großer Bedeutung, um ausreichende Erkennbarkeit auch aus ungünstigen Blickwinkeln und somit die Verkehrssicherheit des Motorrads zu gewährleisten. Um die Ausrichtung der Blinker möglichst exakt vorzugeben, wird vorgeschlagen, dass diese am Haltestab über Formschluss insbesondere einer Rastverbindung und/oder einer Gewindeverbindung eine eindeutige Ausrichtung zugewiesen bekommen. Mit einmaligem genauem Ausrichten des zentralen Haltestabs werden somit sämtliche Eingriffe an den Blinkern erleichtert.

Um die Kabel der Blinker möglichst geschützt anzubringen, ist es von Vorteil, wenn der zentrale Haltestab hohl ist. Die an den Enden angeordneten Blinker haben dann bevorzugt einen Kabelaustritt unmittelbar in den hohlen Haltestab hinein, von wo aus die Kabel im Inneren des Haltestabs weitergeführt werden können. An einer geeigneten Stelle können sie aus dem hohlen Haltestab hinausgeführt und im oder am übrigen Kennzeichenhalter zum Motorrad weitergeführt werden.

Insbesondere bei einem hohlen Haltestab sind die Blinker vorzugsweise in axialer Verlängerung des Haltestabs angeordnet. Um die Blinker in gleicher Höhe am Motorrad zu präsentieren, liegt der zentrale Haltestab horizontal. Gleichzeitig ist er senkrecht zur Längserstreckung des Motorrads angeordnet. Wenn die Blinker in axialer Verlängerung des Haltestabs gehalten werden, bietet der Haltestab gemeinsam mit den Blinkern einen minimalen Widerstand für angreifenden Seitenwind.

Um auch reinem Fahrtwind wenig Fläche entgegen zu setzen, wird vorgeschlagen, dass der Haltestab zu seinen Enden hin verjüngt ist. So kann beispielsweise ein mittlerer Bereich des Haltestabs hohl und dabei ausreichend groß sein, um die von beiden Seiten kommenden Blinkerkabel ohne räumliche Beengung zusammen zu einem weiterführenden Kabelbaum zu führen, während die beiden Enden des Haltestabs zu den Blinkern hin demgegenüber leicht schmaler oder sehr viel schmaler gehalten sind. Der Übergang kann dabei auch stufenweise erfolgen.

Wenn im zentralen Haltestab Stromkabel für die Blinker geführt sind, besitzt er bevorzugt einen Stromentnahmezugang für eine benachbarte Leuchte. So kann bei geometrisch geeigneter Anordnung beispielsweise eine Kennzeichenleuchte neben dem zentralen Haltestab vorgesehen werden.

Es sei ausdrücklich darauf hingewiesen, dass Blinkeranlagen für Motorräder zwar zur Zeit ausschließlich über Stromführungen mit dezentralen Leuchten zugelassen sind. In der Zukunft kann zu erwarten sein, dass stattdessen Lichtquellen zentralisiert werden und das Licht dort abgegriffen und über Lichtleiter zu den eigentlichen Leuchten geführt wird. Es ist ersichtlich, dass die Erfindung in ihren sämtlichen Aspekten auch für eine solche Technologie unmittelbar einsetzber und auch dort vorteilhaft ist.

Nach einem zweiten Aspekt der Erfindung löst die Aufgabe ein Kennzeichenhalter für ein Motorrad mit einem Schildanlageblech und mit einer abgewinkelten Blechlasche am Rand des Schildanlageblechs, wobei am peripheren Ende der Blechlasche die Blinker angeordnet sind.

Eine solche Konstruktion baut den Kennzeichenhalter im Wesentlichen aus Blechen auf, die naturgemäß kostengünstig in der Herstellung und in der Formgebung sind. Insbesondere ermöglicht es die abgewinkelte Blechlasche am Rand des Schildanlageblechs, die Blinker zu einer gegenüber dem übrigen Kennzeichenhalter exponierten Lage zu führen. Die Sichtbarkeit der Blinker wird somit deutlich erhöht. Am Motorrad selbst kann die abgewinkelte Blechlasche insbesondere nach hinten und nach oben ausgerichtet sein.

Nach einem dritten Aspekt der Erfindung löst die Aufgabe ein Kennzeichenhalter für ein Motorrad mit einem Schildanlageblech und mit einer abgewinkelten Blechlasche am Rand des Schildanlageblechs, von welcher aus zumindest etwa rechtwinklig eine Leuchte zum Beleuchten eines am Schildanlageblech angeordneten Kennzeichens absteht.

Wie bereits vorstehend geschildert wurde, macht der Aufbau aus unterschiedlich ausgerichteten und aneinander befestigten Blechen den Kennzeichenhalter in der Herstellung sehr kostengünstig. Dabei ermöglicht es eine geschickte Ausrichtung der abgewinkelten Blechlasche, die Leuchte zum Beleuchten des Kennzeichens ideal auszurichten. Wenn die Blechlasche so abgewinkelt ist, dass sie am Motorrad nach hinten und nach oben führt, steht eine nach hinten rechtwinklig abstehende Leuchte in etwa oberhalb des Kennzeichens und bei geeigneter Formgebung leicht gegenüber dem Kennzeichen nach hinten versetzt. Von dieser Stelle aus kann bereits mit recht schwachen Leuchten eine ausreichende Beleuchtung des Kennzeichens erreicht werden.

In einer bevorzugten Ausführungsform weist die Leuchte an ihrer Stirn einen Reflektor auf. Reflektoren am Heck eines Motorrads erhöhen die Verkehrssicherheit ganz erheblich. Infolge der zumindest etwa rechtwinkligen Anordnung der Leuchte an der abgewinkelten Blechlasche kann die Leuchte ihre Idealposition dadurch erhalten, dass die Blechlasche relativ steil nach oben führt, während die Leuchte horizontal nach hinten oder zumindest unter einem spitzen Winkel zur Horizontalen nach hinten absteht. Somit bietet sich die Stirn an, um dort einen Reflektor vorzusehen. Die Stirn kann bereits dann im Einbauzustand etwa vertikal sein, wenn sie senkrecht zu derjenigen Richtung ist, entlang welcher die Leuchte von der Blechlasche absteht. Meist kann die Stirn jedoch auch in anderen Fällen durch nur geringen Winkelversatz gegenüber einer Erstreckungsrichtung der Leuchte in eine ideale Lage gegenüber der Horizontalen gebracht werden.

Die abstehende Leuchte weist bevorzugt eine flache Form auf, insbesondere mit einem elliptischen oder zumindest ovalen Querschnitt. Eine flache Bauweise vermindert die Angriffsmöglichkeit für Seitenwind. Gleichzeitig kann eine Leuchtfläche an der Leuchte recht breit gezogen werden und somit eine gute flächige Ausleuchtung des Kennzeichens sichergestellt werden.

Es sei ausdrücklich darauf hingewiesen, dass ein an einem Motorrad angebauter Kennzeichenhalter mit einer nach hinten wegstehenden Leuchte zum Beleuchten eines am einem Schildanlageblech angeordneten Kennzeichens mit einer Leuchte in einer flachen Bauform, insbesondere mit einer elliptischen oder sonstigen ovalen Form, nach einem vierten Aspekt der Erfindung auch unabhängig von sämtlichen vorgenannten Merkmalen der Erfindung von Vorteil ist. Die Vorteile einer solchen Bauweise der Leuchte wurden vorstehend erläutert.

Nach einem fünften Aspekt der Erfindung löst die Aufgabe ein Kennzeichenhalter für ein Motorrad mit einem Schildanlageblech und mit einer abgewinkelten Blechlasche am Rand des Schildanlageblechs, wobei das Schildanlageblech ein V-förmiger Rahmen ist, der oberhalb der Schildanlagefläche in zwei getrennten Stegen weiterläuft.

Es wurde bereits erläutert, dass an der abgewinkelten Blechlasche die Blinker und/oder eine Leuchte vorgesehen werden können. Deren E-nergieversorgungen werden bevorzugt zentral am Kennzeichenhalter zusammengeführt und von dort aus zum Motorrad weitergeleitet. Damit führt der Weg bevorzugt die abgewinkelte Blechlasche entlang zum oberen Ende des Schildanlageblechs. Wenn das Schildanlageblech ein V-förmiger Rahmen ist, erstreckt sich dieser einstückig über eine ausreichende Breite und Höhe, um das Kennzeichen sicher zu fixieren. Zwischen zwei Stegen des Rahmens am oberen Ende des Schildanlageblechs kann vorteilhaft ein Zwischenraum entstehen. Dieser Zwischenraum kann nach dem hier vorgestellten Aspekt der Erfindung dazu benutzt werden, die Energieleiter verdeckt aufzunehmen. Insbesondere besteht auf diese Weise nicht die Gefahr, dass die Kabel versehentlich abgerissen werden, was ansonsten an einer so exponierten Baugruppe wie an einem Kennzeichenhalter leicht der Fall wäre.

Nach einem sechsten Aspekt der Erfindung löst die gestellte Aufgabe eine Baugruppe eines Kennzeichenhalters für ein Motorrad aus einem Schildanlageblech, einer Leuchte, einem Blinkerpaar und einem Haltearm für einen Rahmenanschluss, wobei vom Schildanlageblech eine abgewinkelte Lasche abgeht, an welche die Leuchte und das Blinkerpaar modular angeschlossen sind.

Auch dieser Aspekt der Erfindung beruht auf der Erkenntnis, dass der Aufbau des Kennzeichenhalters aus Blechbauteilen äußerst kostengünstig bewerkstelligt werden kann. So werden die drei elementaren technischen Notwendigkeiten eines Kennzeichenhalters jeweils durch Bleche gelöst, nämlich das Anbringen am Motorrad über einen Haltearm aus einem gebogenen Blech, das Halten des Kennzeichens mit einem Schildanlageblech und das Halten einer Kennzeichenleuchte und der Blinker in einem geeigneten Abstand durch eine abgewinkelte Blechlasche. Der modulare Aufbau ermöglicht es auch dem Laien, die Blinkleuchten und/oder die Kennzeichenleuchte ohne Fachpersonal auswechseln zu können, während die Bleche des Kennzeichenhalters permanent am Motorrad fixiert bleiben.

Insbesondere durch einen zentralen Haltestab für die Blinker, der an der Blechlasche bzw. an entsprechenden Stegen des Kennzeichenhalters angebracht ist, kann die Halterung der Blinker ― auch unabhängig von den übrigen Merkmalen vorliegender Erfindung - vorteilhaft stabilisiert werden, sodass die Blinker gut ausgerichtet bleiben und Vibrationen, die auf die Blinker wirken, minimiert werden können.

Es sei ausdrücklich darauf hingewiesen, dass bereits eine Baugruppe eines Kennzeichenhalters für ein Motorrad aus einem Schildanlageblech, einer Leuchte, einem Blinkerpaar und einem Haltearm für einen Rahmenanschluss unabhängig von den übrigen Merkmalen der vorliegenden Erfindung vorteilhaft ist, wenn der Haltearm an das Schildanlageblech modular angeschlossen ist. Diesem siebten Aspekt der Erfindung liegt die Erkenntnis zugrunde, dass bei geeignetem modularem Anschluss zwischen dem Haltearm und dem eigentlichen Kennzeichenhalter das Lösen und Wiederbefestigen des eigentlichen Kennzeichenhalters am Motorrad deutlich schneller von der Hand gehen kann als wenn der Haltearm vom Chassis des Motorrads gelöst werden müsste.

Bei einem aus Blechen aufgebauten Kennzeichenhalter kann die Anschlussverbindung zwischen Haltearm und den peripheren Blechen sehr einfach ausgeführt sein, weil lediglich zwei Bleche verbunden werden müssen. Dies ist insbesondere dann sehr einfach, wenn der Haltearm teilflächig am Schildanlageblech angeschlossen wird.

Um die Anzahl der Kabelführungen möglichst reduziert zu halten, wird vorgeschlagen, dass bei einer Baugruppe eines Kennzeichenhalters mit einer Leuchte und einem Blinkerpaar entweder die Leuchte oder das Blinkerpaar eine Stromzuführung vom Motorrad erhalten und dass von dort aus eine Stromweiterführung zum jeweils anderen Bauelement erfolgt.

Um eine eindeutige Ausrichtung der einzelnen Bauteile zueinander sicher zu stellen, wird vorgeschlagen, dass das Schildanlageblech, die Leuchte, das Blinkerpaar und bevorzugt auch der Haltearm einen eindeutigen Formschluss miteinander aufweisen.

Vor allem können zwei aneinander liegende Bleche Gewindebohrungen aufweisen, so dass sie über eine passende Schraube mit einfachstem Werkzeug sicher aneinander fixiert und gegeneinander festgezogen werden können.

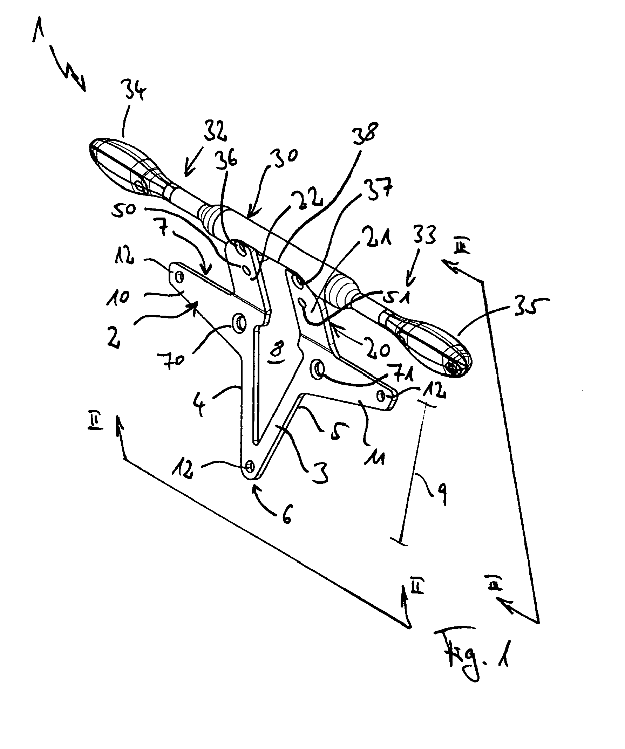

Die Erfindung wird nachstehend anhand von Ausführungsbeispielen näher erläutert. Dabei wird auf die Zeichnung Bezug genommen. In der Zeichnung können funktional gleiche Bauelemente identische Bezugsziffern tragen. Es zeigen
- Figur 1: in einer perspektivischen Ansicht einen erfindungsgemäßen Kennzeichenhalter mit einem Schildanlageblech, einer abgewinkelten Blechlasche am Rand und einem zentralen Haltestab mit angesetzten Blinkern,

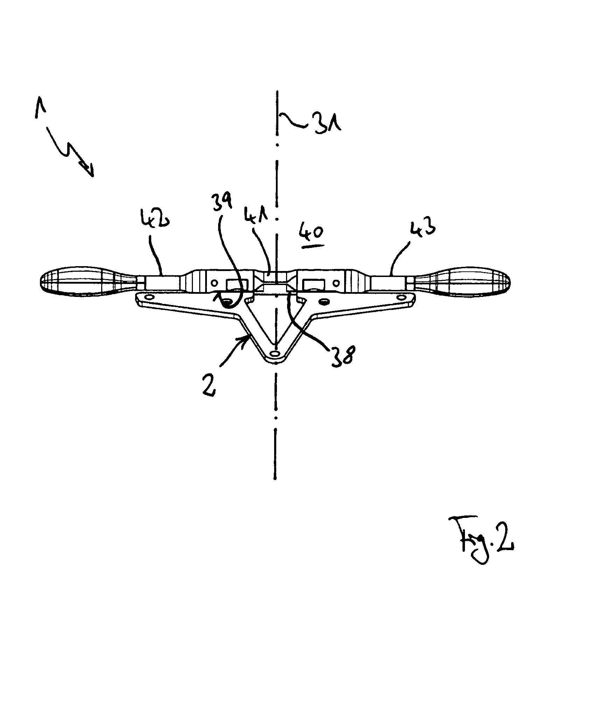

- Figur 2: den Kennzeichenhalter aus Figur 1 in einer Ansicht gemäß Kennzeichnung II-II in Figur 1,

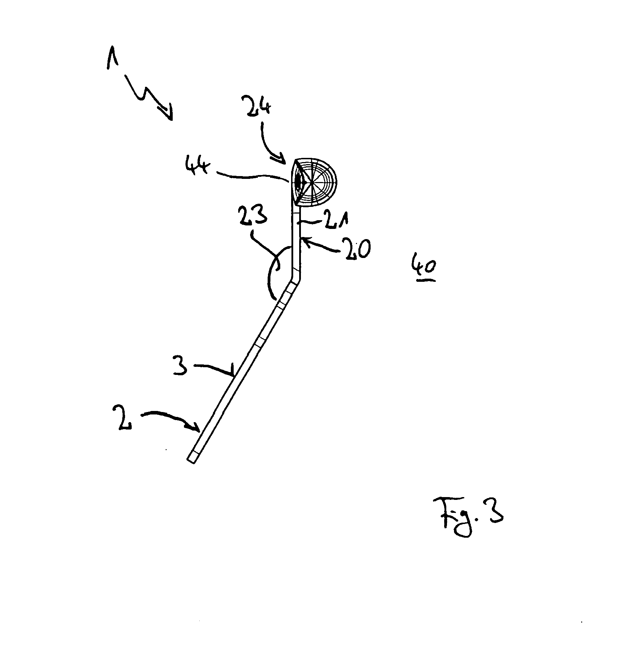

- Figur 3: den Kennzeichenhalter aus den Figuren 1 und 2 in einer seitlichen Ansicht gemäß Kennzeichnung III-III in Figur 1,

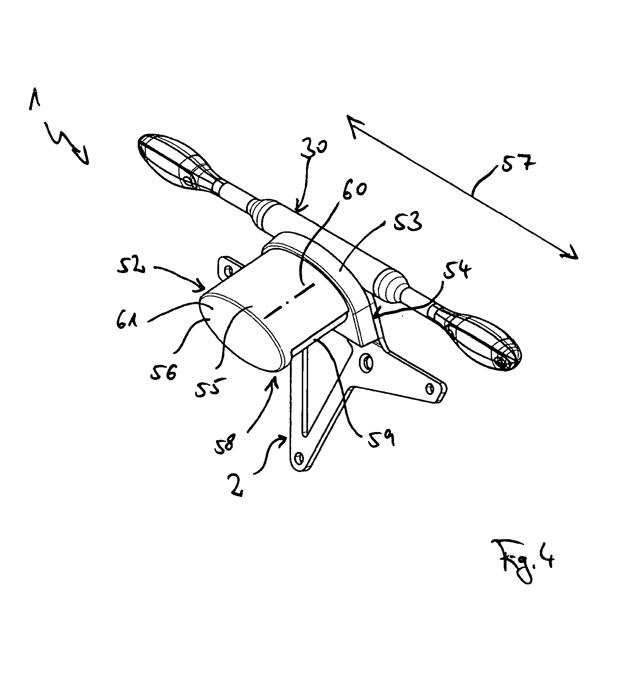

- Figur 4: den Kennzeichenhalter aus den Figuren 1 bis 3 in einer perspektivischen Ansicht ähnlich wie in Figur 1 mit einer vorgesetzten Leuchte,

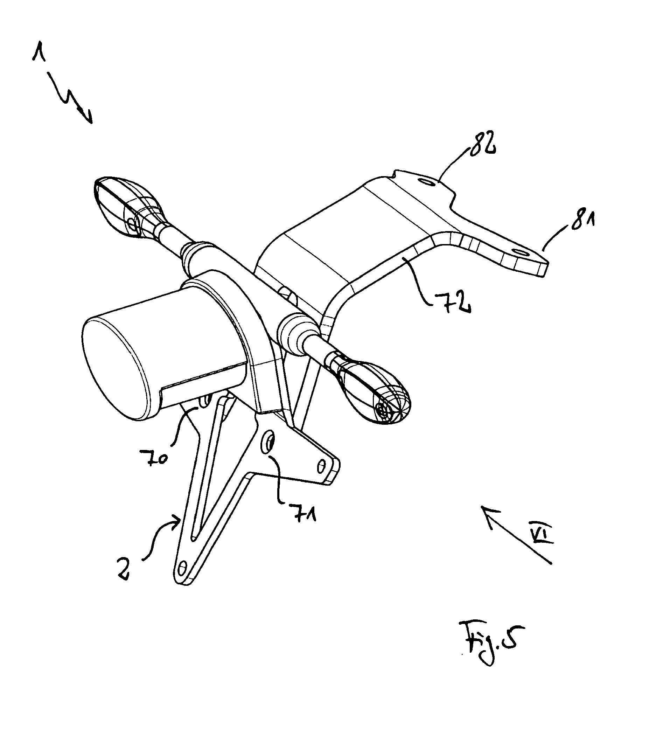

- Figur 5: den Kennzeichenhalter aus den Figuren 1 bis 4 in einer perspektivischen Ansicht ähnlich wie in den Figuren 1 und 4 mit einem angesetzten Haltearm,

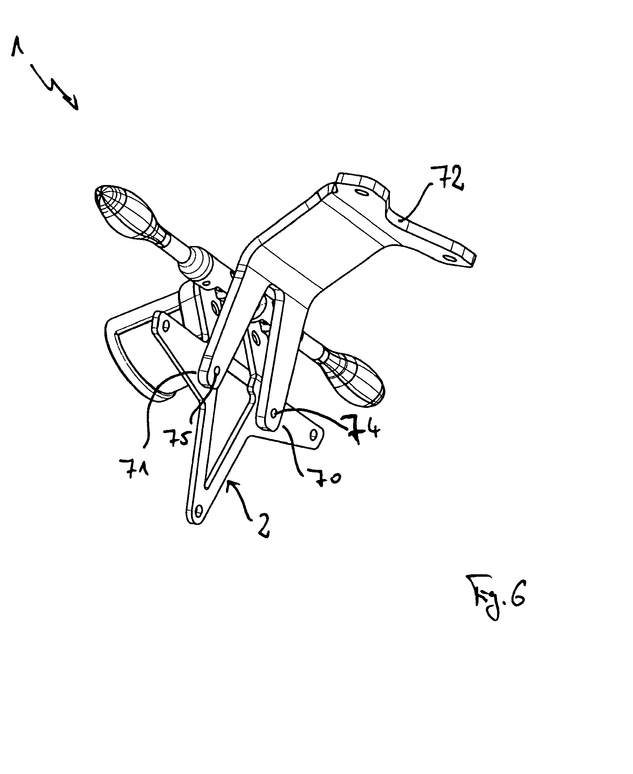

- Figur 6: den Kennzeichenhalter in seiner Ausgestaltung gemäß Figur 5 in einer perspektivischen Ansicht von dessen Rückseite gemäß der Blickrichtungsandeutung VI in Figur 5 und

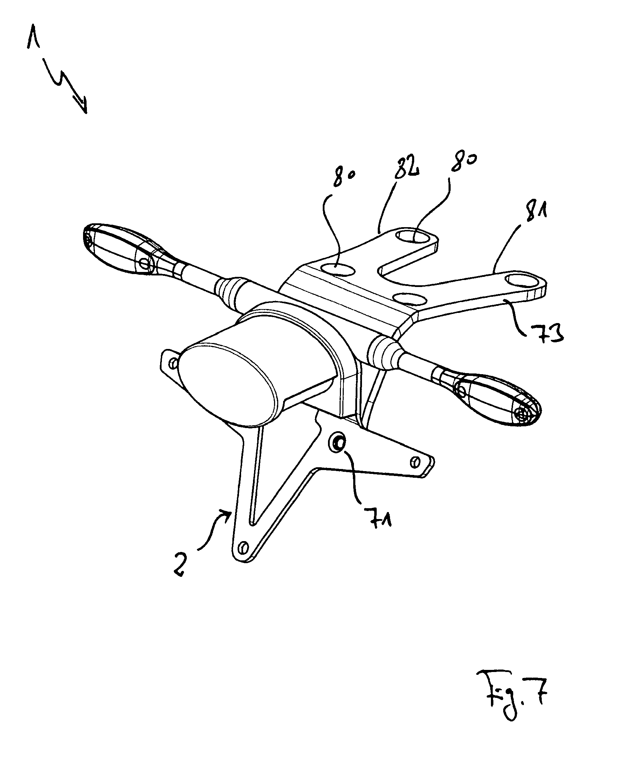

- Figur 7: einen erfindungsgemäßen Kennzeichenhalter in einer ähnlichen perspektivischen Ansicht wie derjenigen der Figur 5 mit einem anderen Haltearm.

Der Kennzeichenhalter 1 in den Figuren weist in seiner tragenden Struktur zunächst ein Schildanlageblech 2 mit einer ebenen Auflagefläche 3 für ein Kennzeichen auf. Die Auflagefläche 3 wird von einem V-förmigen Rahmen mit einem ersten Schenkel 4 und einem zweiten Schenkel 5 gebildet, welche zu einer Unterseite 6 des Kennzeichenhalters 1 einstückig zusammenlaufen. Zu einem oberen Rand 7 des Schildanlageblechs 2 hin laufen die beiden Rahmenschenkel 4, 5 voneinander fort, so dass sich zwischen Ihnen ein Freiraum 8 ergibt.

Der Freiraum ist nur wenige Zentimeter breit, so dass die beiden Rahmenschenkel 4, 5 entsprechend nah beieinander liegen. Sie geben einem auf ihnen zu montierenden Kennzeichen über dessen Höhe (schematisch mit 9 gekennzeichnet) sicheren Halt, während am oberen Rand 7 des Schildanlageblechs 2 zwei Kragarme 10, 11 eine auch seitliche Vergrößerung der Anlagefläche 3 zur sicheren Auflage des Kennzeichens bieten. Im unteren Ende 6 des V-förmigen Rahmens 2 ist eine Bohrung 12 zum Durchführen einer Kennzeichenbefestigungsschraube (nicht dargestellt) vorgesehen. Zwei weitere ähnliche oder gleiche Bohrungen sind in den äußeren Enden der Kragarme 10, 11 vorgesehen.

Am oberen Rand 7 des Schildanlageblechs 2 ist stumpf abgewinkelt eine Blechlasche 20 angeordnet. Angesichts des Freiraums 8 ist diese in Form zweier Streifen 21, 22 ausgeführt. Die Blechlasche 20 führt mit ihren parallelen Laschenstreifen 21, 22 über den oberen Rand 7 des Schildanlageblechs 2 hinaus und erhält den Freiraum 8 auch in diesem Bereich aufrecht. Ein Winkel 23 zwischen dem Schildanlageblech 2 und der Blechlasche 22 beträgt dabei etwa 150 °.

An einem bezüglich des Schildanlageblechs 2 peripheren Ende 24 der Blechlasche 20 ist ein zylindrischer Stab 30 ― wie auch alle übrigen Bauteile ― bezüglich einer Symmetrieachse 31 zentral angeordnet. Er dient als zentraler Haltestab 30 für zwei an seinen Enden 32, 33 fest angesetzte Blinker 34, 35.

Zum Befestigen des zentralen Haltestabs 30 an der abgewinkelten Blechlasche 20 sind dort Gewindebohrungen 36, 37 vorgesehen, welche mit einem Paar Gewindebohrungen (nicht dargestellt) im zentralen Haltestab 30 korrespondieren. Der zentrale Haltestab 30 erfährt eine eindeutige Ausrichtung gegenüber der abgewinkelten Blechlasche 20 dadurch, dass er es zum Übereinanderbringen der Gewindebohrungen 36 bzw. 37 mit ihrem jeweiligen Pendant erforderlich macht, dass die Blechlasche 20 in eine konturgleiche Aussparung 38 am zentralen Haltestab eingefügt wird. Dort befindet sich eine Anlagefläche 39 für die abgewinkelte Blechlasche 20, die zu einem eindeutigen Formschluss zwischen dem zentralen Haltestab 30 und der abgewinkelten Blechlasche 20 spätestens dann führt, wenn entsprechende Schrauben in die Gewindebohrungen 36 bzw. 37 und durch diese hindurch in ihre entsprechenden Pendants eingezogen werden.

Zwischen der abgewinkelten Blechlasche 20 und dem Schildanlageblech 2 besteht eine eindeutige Formgebung, da diese Elemente einstückig miteinander ausgeführt sind. Es versteht sich, dass die Anordnung der beiden Stege 21, 22 und des Haltestabs 30 auch unabhängig von der Form der übrigen Kennzeichenhalters die Gesamtanordnung stabilisiert.

Der zentrale Haltestab 30 hat in einem rückwärtigen Bereich 40 des Kennzeichenhalters 1 eine Öffnung 41. Zu dieser laufen Stromführungen (nicht dargestellt) durch den zylindrischen Hauptkörper des zentralen Haltearms 30 und durch zwei zylindrische Verlängerungsarme 42, 43 zu den Blinkern 34, 35. Die Blinker 34, 35 sind über geeignete Vorrichtungen an den zylindrischen Fortsetzungsstücken 42, 43, diese wiederum an den Hauptkörper des zentralen Haltearms 30 in ihrer Ausrichtung eindeutig fixiert, so dass sich Abstrahlflächen 44 der Blinker parallel zur abgewinkelten Blechlasche 20 legen.

In der abgewinkelten Blechlasche 20 sind zwei weitere Bohrungen 50, 51 ausgespart. An diesen Bohrungen 50, 51 lässt sich leicht die Kennzeichenleuchte 52 über eine Anschlussplatte 53 anschließen. Die Anschlussplatte 53 hat eine ebene Bodenfläche 54, so dass sie sich formschlüssig auf die abgewinkelte Blechlasche 20 passt. Von der Bodenplatte 53 steht rechtwinklig ein Leuchtengehäuse 55 ab. Dieses hat einen ovalen Querschnitt und eine ebenso ovale Stirnfläche 56, wobei sich das Oval des Gehäusequerschnitts in eine Breitenrichtung 57 des Kennzeichenhalters 1 erstreckt, ebenso wie der zentrale Haltearm 30.

An einer Unterseite 58 des Leuchtengehäuses 55 ist eine leicht streuende transluzente Leuchtfläche 59 vorgesehen. Diese erstreckt sich über die gesamte Unterseite 58 des Leuchtengehäuses 55. Die ovale Stirnfläche 56 ist ganzflächig mit einem Reflektor 61 bedeckt.

Das untere Ende 6 des Schildanlageblechs 2 lässt sich rechtwinklig auf eine Längserstreckung (angedeutet durch die Achse 60) des Leuchtengehäuses 55 projizieren. Anders herum ausgedrückt strahlt die Leuchte 52 über die gesamte Länge des Schildanlageblechs 2 ab. Eine im Leuchtengehäuse 55 angeordnete Lichtquelle (nicht dargestellt) wird von der Öffnung 41 des zentralen Haltestabs 30 aus mit Strom versorgt. Die Leuchte 52 nutzt die Öffnung 41 somit als Stromentnahmezugang. Die hierzu notwendige Kabelführung hat ausreichend Spielraum, weil zwischen den beiden Stegen 21, 22 der abgewinkelten Blechlasche 20 der Freiraum 8 diesen schafft.

An zwei weiteren Gewindebohrungen 70, 71 können verschiedenartigste Haltearme 72, 73 angeschraubt werden. Hierzu weisen diese exakt korrespondierende Gewindebohrungen 74, 75 auf. Die Form der Haltearme 72, 73 bestimmt sich nach dem Motorradtyp, an welchem der Kennzeichenhalter 1 angebracht werden soll. Hieraus ergeben sich konkrete Anbringungspunkte (exemplarisch mit 80 gekennzeichnet) sowie die erforderliche oder bevorzugte Raumform des Haltearms für den Rahmenanschluss, beispielsweise also ob diese an bestimmten Stellen mehr oder weniger gerade, gekrümmt oder geknickt geführt ist. Insbesondere kann der Haltearm 72, 73 auch in zwei Armen (exemplarisch mit 81, 82 gekennzeichnet) vom eigentlichen Kennzeichenhalter weggeführt sein. Der Haltearm kann bevorzugt mit manuellen Kräften bleibend verbogen werden, um ohne Werkzeug eine Detailanpassung zwischen Kennzeichenhalter und Motorrad vornehmen zu können.
Bezugszeichenliste:
- 1: Kennzeichenhalter
- 2: Schildanlageblech
- 3: Anlagefläche
- 4, 5: V-förmige Rahmenstege
- 6: unteres Ende
- 7: obere Kante
- 8: Freiraum
- 9: Kennzeichenhöhe
- 10,11: Kragarme
- 12: Schildanschlussbohrungen
- 20: abgewinkelte Blechlasche
- 21,22: getrennte Stege der abgewinkelten Blechlasche
- 23: stumpfer Winkel
- 24: peripheres Ende der abgewinkelten Blechlasche
- 30: zylindrischer zentraler Haltearm
- 31: Symmetrieachse
- 32,33: Enden des zentralen Haltestabs
- 34,35: Blinker
- 36,37: Gewindebohrungen
- 38: Ausnehmung
- 39: Anlagefläche
- 40: Rückseite
- 41: Stromentnahmeöffnung
- 42,43: stufenförmig verjüngte zylindrische Fortsetzungsrohre
- 44: Leuchtfläche
- 50,51: Befestigungslöcher für Leuchte
- 52: Leuchte
- 53: Leuchtenboden
- 54: Bodenfläche
- 55: Leuchtengehäuse
- 56: Stirnfläche
- 57: Querrichtung
- 58: Unterseite der Leuchte
- 59: Leuchtfläche
- 60: Längsachse der Leuchte
- 61: ovaler Reflektor
- 70,71: Gewindebohrungen
- 72: Haltearm
- 73: alternativer Haltearm
- 74,75: Gewindebohrungen im Haltearm
- 80: Befestigungseinrichtungen für Rahmenanschluss am Motorrad
- 81,82: getrennte Arme des Haltearms

## Patentansprüche

1. Kennzeichenhalter (1) für ein Motorrad mit einem zentralen Haltestab (30, 42, 43) mit an dessen Enden (32, 33) angesetzten Blinkern (34, 35).

2. Kennzeichenhalter (1), insbesondere nach Anspruch 1, für ein Motorrad mit einem Schildanlageblech (2) und mit einer abgewinkelten (23) Blechlasche (20) am Rand (7) des Schildanlageblechs (2), an deren peripherem Ende (24) Blinker (34, 35) angeordnet sind.

3. Kennzeichenhalter (1), insbesondere nach Anspruch 1 oder 2, für ein Motorrad mit einem Schildanlageblech (2) und mit einer abgewinkelten (23) Blechlasche (20) an einem Rand (7) des Schildanlageblechs (2), von welcher aus zumindest etwa rechtwinklig eine Leuchte (52) zum Beleuchten eines am Schildanlageblech (2) angeordneten Kennzeichens absteht.

4. An einem Motorrad angebauter Kennzeichenhalter (1), insbesondere nach einem der vorhergehenden Ansprüche, mit einer nach hinten wegstehenden Leuchte (52) zum Beleuchten eines an einem Schildanlageblech (2) angeordneten Kennzeichens mit einer flachen, insbesondere einer ovalen, Form.

5. Kennzeichenhalter (1), insbesondere nach einem der vorhergehenden Ansprüche, für ein Motorrad mit einem Schildanlageblech (2) und mit einer abgewinkelten (23) Blechlasche (20) an einem Rand (7) des Schildanlageblechs (2), wobei das Schildanlageblech (2) ein, vorzugsweise V-förmiger, Rahmen (4, 5) ist, der oberhalb der Schildanlagefläche (3) in zwei getrennten Stegen (21, 22) weiterläuft.

6. Baugruppe eines Kennzeichenhalters (1) insbesondere nach einem der vorhergehenden Ansprüche, für ein Motorrad aus einem Schildanlageblech (2), einer Leuchte (52), einem Blinkerpaar (34, 35) und einem Haltearm (72, 73) für einen Rahmenanschluss, wobei vom Schildanlageblech (2) eine abgewinkelte (23) Blechlasche (20) abgeht, an welche eine Leuchte (52) und das Blinkerpaar (34, 35) modular angeschlossen sind.

7. Baugruppe eines Kennzeichenhalters (1), insbesondere nach einem der vorhergehenden Ansprüche, für ein Motorrad aus einem Schildanlageblech (2), einer Leuchte (52), einem Blinkerpaar (34, 35) und einem Haltearm (72, 73) für einen Rahmenanschluss, wobei der Haltearm (72, 73) an das Schildanlageblech (2) modular angeschlossen ist.

8. Kennzeichenhalter bzw. Baugruppe nach einem der vorhergehenden Ansprüche, ***dadurch gekennzeichnet, dass*** Blinker über Formschluss insbesondere einer Rastverbindung und/oder einer Gewindeverbindung eine eindeutige Ausrichtung an einem Haltestab aufweisen.

9. Kennzeichenhalter bzw. Baugruppe nach einem der vorhergehenden Ansprüche, ***dadurch gekennzeichnet, dass*** ein zentraler Haltestab hohl ist.

10. Kennzeichenhalter bzw. Baugruppe nach einem der vorhergehenden Ansprüche, ***dadurch gekennzeichnet, dass*** Blinker in axialer Verlängerung eines Haltestabs angeordnet sind.

11. Kennzeichenhalter bzw. Baugruppe nach einem der vorhergehenden Ansprüche, ***dadurch gekennzeichnet, dass*** ein Haltestab zu seinen Enden hin verjüngt ist, insbesondere stufenweise.

12. Kennzeichenhalter bzw. Baugruppe nach einem der vorhergehenden Ansprüche, ***dadurch gekennzeichnet, dass*** ein Haltestab einen Stromentnahmezugang für eine benachbarte Leuchte aufweist.

13. Kennzeichenhalter bzw. Baugruppe nach einem der vorhergehenden Ansprüche, ***dadurch gekennzeichnet, dass*** eine Leuchte einen Reflektor an ihrer Stirn aufweist.

14. Kennzeichenhalter bzw. Baugruppe nach einem der vorhergehenden Ansprüche, ***dadurch gekennzeichnet, dass*** eine Leuchte eine flache, insbesondere eine ovale, Form aufweist.

15. Kennzeichenhalter bzw. Baugruppe nach einem der vorhergehenden Ansprüche, ***dadurch gekennzeichnet, dass*** zum Befestigen des Kennzeichenhalters am Motorrad ein Haltearm aus einem Blech vorgesehen ist.

16. Kennzeichenhalter bzw. Baugruppe nach einem der vorhergehenden Ansprüche, ***dadurch gekennzeichnet, dass*** eine Leuchte ein Blinkerpaar mit Strom speist oder dass ein Blinkerpaar eine Leuchte mit Strom speist.

17. Kennzeichenhalter bzw. Baugruppe nach einem der vorhergehenden Ansprüche, ***dadurch gekennzeichnet, dass*** ein Haltearm ein Blech aufweist, welches teilflächig an einem Schildanlageblech angeschlossen ist.

18. Kennzeichenhalter bzw. Baugruppe nach einem der vorhergehenden Ansprüche, ***dadurch gekennzeichnet, dass*** ein Schildanlageblech, ein Leuchte, ein Blinkerpaar und/oder ein Haltearm einen eindeutigen Formschluss miteinander aufweisen.

19. Kennzeichenhalter bzw. Baugruppe nach einem der vorhergehenden Ansprüche, ***gekennzeichnet durch*** Gewindebohrungen in Blechbauteilen.

20. Motorrad mit einem Kennzeichenhalter und/oder einer Baugruppe nach einem der vorhergehenden Ansprüche.
